(19) **Europäisches Patentamt**
**European Patent Office**
**Office européen des brevets**

(11) **EP 4 621 367 A1**

(12) **EUROPEAN PATENT APPLICATION**

(43) Date of publication:
24.09.2025 Bulletin 2025/39

(21) Application number: 24164770.0

(22) Date of filing: 20.03.2024

(51) International Patent Classification (IPC):
*G01J 3/02* (2006.01)  *G01J 3/28* (2006.01)

(52) Cooperative Patent Classification (CPC):
**G01J 3/0278; G01J 3/0264; G01J 3/027;**
**G01J 3/0272;** G01J 3/28

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **trinamiX GmbH**
**67063 Ludwigshafen am Rhein (DE)**

(72) Inventors:
• **Hoffmann, Joerg**
**67059 Ludwigshafen am Rhein (DE)**
• **Lehnert, Tibor Peter**
**67059 Ludwigshafen am Rhein (DE)**

(74) Representative: **Altmann Stößel Dick**
**Patentanwälte PartG mbB**
**Theodor-Heuss-Anlage 2**
**68165 Mannheim (DE)**

(54) **METHOD OF OBTAINING AT LEAST ONE SPECTROSCOPIC INFORMATION ON AT LEAST ONE OBJECT**

(57)   A method and a spectrometer device (110) for obtaining at least one spectroscopic information on at least one object (112) are disclosed. The method comprises using at least one spectrometer device (110), wherein the spectrometer device (110) comprises
- at least one light source (114) configured for generating illumination light (116) for illuminating the object (112);
- at least one detector (122) configured for detecting detection light (124) from the object (112), wherein the detector (122) comprises a plurality of photosensitive elements (126), wherein each of the photosensitive elements (126) is configured for generating at least one detector signal in response to illumination by light, wherein the detector (122) is arranged to detect the detection light (124) at an angle with respect to the illumination light (116); and
- at least one evaluation unit (128) configured for evaluating the detector signals.
    The method comprises the following steps:
a) illuminating the object (112) by using the light source (114);
b) generating a plurality of detector signals by using the detector (122), wherein the plurality of detector signals comprises at least one detector signal from each photosensitive element (126);
c) evaluating, by using the evaluation unit (128), the plurality of detector signals to obtain at least one item of relative detector signal information;
d) determining a distance (166) between the object (112) and the spectrometer device (110) using the item of relative detector signal information; and
e) evaluating the plurality of detector signals from the photosensitive elements (126) to derive the spectroscopic information in case the distance (166) is within at least one predefined distance range.

FIG.1

## Description

Technical Field

The invention relates to a method and a spectrometer device for obtaining at least one spectroscopic information on at least one object. The invention further relates to a computer program and a computer-readable storage medium for performing the method. Such devices and methods can, in general, be used for investigating or monitoring purposes, in particular, in the infrared (IR) spectral region, especially in the near-infrared (NIR) spectral region, and in the visible (VIS) spectral region, e.g. in a spectral region allowing to mimic a human's ability of color sight. However, further applications are feasible.

Background art

Spectrometer devices are known to be efficient tools for obtaining information on the spectral properties of an object, when emitting, irradiating, reflecting and/or absorbing light. Spectrometer devices, thus, may assist in analyzing samples or other tasks in which information on the spectral properties of an object is of interest.
Usually, in spectrometer devices, spectral information is obtained via one or more detectors and one or more wavelength-selective optical elements, such as one or more dispersive optical elements, filters such as bandpass filters, prisms, gratings, interferometers, or the like. The detectors may comprise any type of light-sensitive element, such as one or more single or multiple pixel detectors, line detectors or array detectors having one- or two-dimensional arrays of pixels. Further, spectrometer devices may comprise one or more light sources. Thus, in spectroscopy, typically, tunable light sources, e.g. lasers, and/or broadband emitting light sources are used, such as halogen-gas filled light bulbs and/or hot filaments. However, additionally or alternatively, other light sources, such as light emitting diodes have also been proposed for the visible spectral region.
A distance between a sample to be analyzed and the spectrometer device may generally have an impact on the acquired spectral information. Thus, in spectroscopy, correct positioning of the sample to be analyzed with respect to the spectrometer device may be required. Maintaining a specified distance between the sample and the spectrometer device during a measurement may therefore be of great importance, in particular for mobile-based spectrometer devices. For example, spectrometer devices are known which use a sample interface such as a glass window for ensuring correct positioning of the sample to be analyzed with respect to the spectrometer device.
However, despite the advantages achieved by known methods and devices, several technical challenges remain. Specifically, the use of sample interfaces may be detrimental in case of degradation of the sample interface, e.g. due to aging, mechanical stress, scratches and/or dirt. Degraded sample interfaces may disturb spectral measurement with the spectrometer device. Further, sample interfaces may require direct contact with the sample to be analyzed for ensuring the predefined positioning. However, for some applications, it may be required to avoid direct contact with the sample to be analyzed, e.g. to avoid uncomfortable contact with the human body and/or to avoid unhygienic contact in food applications.

Problem to be solved

It is therefore desirable to provide methods and devices, which at least partially address the above-mentioned technical challenges and at least substantially avoid the disadvantages of known methods and devices. Specifically, it is an object of the present invention to provide a method for obtaining at least one spectroscopic information on at least one object which allow for precise and reliable spectroscopic measurements by ensuring correct positioning of the object with respect to the spectrometer device.

Summary

This problem is addressed by a method and a spectrometer device for obtaining at least one spectroscopic information on at least one object, and by a computer program and a computer-readable storage medium with the features of the independent claims. Advantageous embodiments which might be realized in an isolated fashion or in any arbitrary combinations are listed in the dependent claims as well as throughout the specification.
In a first aspect of the present invention, a method for obtaining at least one spectroscopic information on at least one object is disclosed, wherein the method comprises using at least one spectrometer device.
The term "spectrometer device" as used herein is a broad term and is to be given its ordinary and customary meaning to a person of ordinary skill in the art and is not to be limited to a special or customized meaning. The term specifically may refer, without limitation, to an optical device configured for acquiring at least one item of spectral information on at least one object. Specifically, the at least one item of spectral information may refer to at least one optical property or optically measurable property which is determined as a function of a wavelength, for one or more different wavelengths. More specifically, the optical property or optically measurable property, as well as the at least one item of spectral information, may relate to at least one property characterizing at least one of a transmission, an absorption, a reflection and an emission of the at least one object, either by itself or after illumination with external light. The at least one optical property may be determined for one or more wavelengths. The spectrometer device specifically may form an apparatus which is capable of recording a signal intensity with respect to the corresponding wavelength of a spectrum or a partition thereof, such as a wavelength interval, wherein the signal intensity may, specifically, be provided as an electrical signal which may be used for further evaluation.

The spectrometer device, as an example, may be or may comprise a device which allows for a measurement of at least one spectrum, e.g., for the measurement of a spectral flux, specifically as a function of a wavelength or detection wavelength. The spectrum may be acquired, as an example, in absolute units or in relative units, e.g., in relation to at least one reference measurement. Thus, as an example, the acquisition of the at least one spectrum specifically may be performed either for a measurement of the spectral flux (unit W/nm) or for a measurement of a spectrum relative to at least one reference material (unit 1), which may describe the property of a material, e.g., reflectance over wavelength. Additionally or alternatively, the reference measurement may be based on a reference light source, an optical reference path, a calculated reference signal, e.g. a calculated reference signal from literature, and/or on a reference device.

Specifically, the at least one spectrometer device may be a diffusive reflective spectrometer device configured for acquiring spectral information from the light which is diffusively reflected by the at least one object, e.g., by at least one sample. Additionally or alternatively, the at least one spectrometer device may be or may comprise an absorption- and/or transmission spectrometer. In particular, measuring a spectrum with the spectrometer device may comprise measuring absorption in a transmission configuration. Specifically, the spectrometer device may be configured for measuring absorption in a transmission configuration. However, other types of spectrometer devices are also feasible.

The at least one spectrometer device, specifically and as will be outlined in further detail below, may comprise at least one light source which, as an example, may be at least one of a tunable light source, a light source having at least one fixed emission wavelength and a broadband light source. The spectrometer device, as will be outlined in further detail below, further comprises at least one detector device configured for detecting light, such as light which is at least one of transmitted, reflected or emitted from the at least one object. The spectrometer device further may comprise at least one wavelength-selective element, such as at least one of a grating, a prism and a filter, e.g. a length variable filter having varying transmission properties over its lateral extension. The wavelength-selective element may be used for separating incident light into a spectrum of constituent wavelength signals whose respective intensities are determined by employing a detector such as a detector having a detector array as described below in more detail.

The spectrometer device, specifically, may be a portable spectrometer device. The term "portable" as used herein is a broad term and is to be given its ordinary and customary meaning to a person of ordinary skill in the art and is not to be limited to a special or customized meaning. The term specifically may refer, without limitation, to the property of at least one object of being moved by human force, such as by a single user. Specifically, the object characterized by the term "portable" may have a weight not exceeding 10 kg, specifically not exceeding 5 kg, more specifically not exceeding 1 kg or even not exceeding 500 g. Additionally or alternatively, the dimensions of the object characterized by the term "portable" may be such that the object extends by no more than 0.3 m into any dimension, specifically by no more than 0.2 m into any dimension. The object, specifically, may have a volume of no more than 0.03 $m^3$, specifically of no more than 0.01 $m^3$, more specifically no more than 0.001 $m^3$ or even no more than 500 $mm^3$. In particular, as an example, the portable spectrometer device may have dimensions of e.g. 10 mm by 10 mm by 5 mm. Specifically, the portable spectrometer device may be part of a mobile device or may be attachable to a mobile device, such as a notebook computer, a tablet, a cell phone, such as a smartphone, a smartwatch and/or a wearable computer, also referred to as "wearable", e.g. a body borne computer such as a wristband or a watch. In particular, the weight of the spectrometer device, specifically the portable spectrometer device, may be in the range from 1 g to 100 g, more specifically in the range from 1 g to 10 g.

The term "spectroscopic information", also referred to as "spectral information" or as "an item of spectral information", as used herein is a broad term and is to be given its ordinary and customary meaning to a person of ordinary skill in the art and is not to be limited to a special or customized meaning. The term specifically may refer, without limitation, to an item of information, e.g. on at least one object and/or radiation emitted by at least one object, characterizing at least one optical property of the object, more specifically at least one item of information characterizing, e.g. qualifying and/or quantifying, at least one of a transmission, an absorption, a reflection and an emission of the at least one object. As an example, the at least one item of spectral information may comprise at least one intensity information, e.g. information on an intensity of light being at least one of transmitted, absorbed, reflected or emitted by the object, e.g. as a function of a wavelength or wavelength sub-range over one or more wavelengths, e.g. over a range of wavelengths. Specifically, the intensity information may correspond to or be derived from the signal intensity, specifically the electrical signal, recorded by the spectrometer device with respect to a wavelength or a range of wavelengths of the spectrum.

The spectrometer device specifically may be configured for acquiring at least one spectrum or at least a part of a spectrum of detection light propagating from the object to the spectrometer. The spectrum may describe the radiometric unit of spectral flux, e.g. given in units of watt per nanometer (W/nm), or other units, e.g. as a function of the wavelength of the detection light. Thus, the spectrum may describe the optical power of light, e.g. in the NIR spectral range, in a specific wavelength band. The spectrum may contain one or more optical variables as a function of the wavelength, e.g. the power spectral density, electric signals derived by optical measurements and the like. The spectrum may indicate, as an example, the power spectral density and/or the spectral flux of the object, e.g. of a sample, e.g. relative to a reference sample, such as a transmittance and/or a reflectance of the object, specifically of the sample.

The spectrum, as an example, may comprise at least one measurable optical variable or property of the detection light and/or of the object, specifically as a function of the illumination light and/or the detection light. As an example, the at least one measurable optical variable or property may comprise at least one at least one radiometric quantity, such as at least one of a spectral density, a power spectral density, a spectral flux, a radiant flux, a radiant intensity, a spectral radiant intensity, an irradiance, a spectral irradiance. Specifically, as an example, the spectrometer device, specifically the detector, may measure the irradiance in Watt per square meter (W/m$^2$), more specifically the spectral irradiance in Watt per square meter per nanometer (W/m$^2$/nm). Based on the measured quantity the spectral flux in Watt per nanometer (W/nm) and/or the radiant flux in Watt (W) may be determined, e.g. calculated, by taking into account an area of the detector.

The term "object" as used herein is a broad term and is to be given its ordinary and customary meaning to a person of ordinary skill in the art and is not to be limited to a special or customized meaning. The term specifically may refer, without limitation, to at least one object may comprise one or more articles and/or one or more parts of an article, wherein the at least one article or the at least one part thereof may comprise at least one component which may provide a spectrum suitable for investigations. Additionally or alternatively, the object may be or may comprise one or more living beings and/or one or more parts thereof, such as one or more body parts of a human being, e.g. a user, and/or an animal. The object specifically may comprise at least one sample which may fully or partially be analyzed by spectroscopic methods. As an example, the object may be or may comprise at least one of: human or animal skin; edibles, such as fruits; plastics and textile.

The term "obtaining" as used herein is a broad term and is to be given its ordinary and customary meaning to a person of ordinary skill in the art and is not to be limited to a special or customized meaning. The term specifically may refer, without limitation, to a process of qualitatively and/or quantitatively determining at least one item of information, specifically the spectroscopic information. Specifically, the obtaining of the spectroscopic information may comprise acquiring at least one sensor signal by using an optical sensor, such as the detector, and evaluating the acquired sensor signal to directly or indirectly derive the spectroscopic information.

The spectrometer device comprises:

- at least one light source configured for generating illumination light for illuminating the object;
- at least one detector configured for detecting detection light from the object, wherein the detector comprises a plurality of photosensitive elements, wherein each of the photosensitive elements is configured for generating at least one detector signal in response to illumination by light, wherein the detector is arranged to detect the detection light at an angle with respect to the illumination light; and
- at least one evaluation unit configured for evaluating the detector signals;

The term "light source" as used herein is a broad term and is to be given its ordinary and customary meaning to a person of ordinary skill in the art and is not to be limited to a special or customized meaning. The term specifically may refer, without limitation, to an arbitrary device configured for generating or providing light. The light source specifically may be or may comprise at least one electrical light source, such as an electrically driven light source. For example, the light source may comprise at least one element selected from the group consisting of: an incandescent lamp; a light-emitting diode (LED); a laser, specifically a laser diode, a solid-state laser, a gas laser, a quantum cascade laser; a plasma light source; a low pressure discharge lamp, specifically a low pressure fluorescent lamp; a high pressure discharge lamp; an electrical light source.

The term "light" as used herein is a broad term and is to be given its ordinary and customary meaning to a person of ordinary skill in the art and is not to be limited to a special or customized meaning. The term specifically may refer, without limitation, to electromagnetic radiation in one or more of the infrared, the visible and the ultraviolet spectral range. Herein, the term "ultraviolet spectral range", generally, refers to electromagnetic radiation having a wavelength of 1 nm to 380 nm, preferably of 100 nm to 380 nm. Further, in partial accordance with standard ISO-21348 in a valid version at the date of this document, the term "visible spectral range", generally, refers to a spectral range of 380 nm to 760 nm. The term "infrared spectral range" (IR) generally refers to electromagnetic radiation of 760 nm to 1000 $\mu$m, wherein the range of 760 nm to 1.5 $\mu$m is usually denominated as "near infrared spectral range" (NIR) while the range from 1.5 $\mu$m to 15 $\mu$m is denoted as "mid infrared spectral range" (MidIR) and the range from 15 $\mu$m to 1000 $\mu$m as "far infrared spectral range" (FIR). Preferably, light used for the typical purposes of the present invention is light in the infrared (IR) spectral range, more preferred, in the near infrared (NIR) and/or the mid infrared spectral range (MidIR), especially the light having a wavelength of 1 $\mu$m

to 5 $\mu$m, preferably of 1 $\mu$m to 3 $\mu$m. This is due to the fact that many material properties or properties on the chemical constitution of many objects may be derived from the near infrared spectral range. It shall be noted, however, that spectroscopy in other spectral ranges is also feasible and within the scope of the present invention.

In spectroscopy, various sources and paths of light are to be distinguished. In the context of the present invention, a nomenclature is used which, firstly, denotes light propagating from the light source to the object as "illuminating light" or "illumination light". Secondly, light propagating from the object to the detector is denoted as "detection light". The detection light may comprise at least one of illumination light reflected by the object, illumination light scattered by the object, illumination light transmitted by the object, luminescence light generated by the object, e.g., phosphorescence or fluorescence light generated by the object after optical, electrical or acoustic excitation of the object by the illumination light, or the like. Thus, the detection light may directly or indirectly be generated through the illumination of the object by the illumination light.

Consequently, the term "illuminate", as used herein, is a broad term and is to be given its ordinary and customary meaning to a person of ordinary skill in the art and is not to be limited to a special or customized meaning. The term specifically may refer, without limitation, to the process of exposing at least one element to light.

The light source may comprise at least one light-emitting diode and at least one luminescent material for light-conversion of primary light generated by the light-emitting diode, wherein, specifically, the illumination light may be a combination of the primary light and light generated by the light-conversion by the luminescent material or light generated by the light conversion of the luminescent material, also referred to as secondary light.

The term "light-emitting diode" or briefly "LED", as used herein, is a broad term and is to be given its ordinary and customary meaning to a person of ordinary skill in the art and is not to be limited to a special or customized meaning. The term specifically may refer, without limitation, to an optoelectronic semiconductor device capable of emitting light when an electrical current flows through the device. The optoelectronic semiconductor device may be configured for generating the light due to various physical processes, including one or more of spontaneous emission, induced emission, decay of metastable excited states and the like. Thus, as an example, the light-emitting diode, may comprise one or more of: a light-emitting diode based on spontaneous emission of light, in particular an organic light emitting diode, a light-emitting diode based on superluminescence (sLED), or a laser diode (LD) In the following, without narrowing the possible embodiments of the light-emitting diode to any of the before-mentioned physical principles or setups, the abbreviation "LED" will be used for any type of light-emitting diode. Specifically, the LED may comprise at least two layers of semiconductor material, wherein light may be generated at at least one interface between the at least two layers of semiconductor material, specifically due to a recombination of positive and negative electrical charges, e.g. due to electron-hole recombination. The at least two layers of semiconductor material may have differing electrical properties, such as at least one of the layers being an n-doped semiconductor material and at least one of the layers being a p-doped semiconductor material. Thus, as an example, the LED may comprise at least one pn-junction and/or at least one pin-set up. It shall be noted, however, that other device structures are feasible, too. The at least one semiconductor material may specifically be or may comprise at least one inorganic semiconducting material. It shall be noted, however, that organic semiconducting materials may be used additionally or alternatively.

Generally, the LED may convert electrical current into light, specifically into the primary light, more specifically into blue primary light, as will be outlined in further detail below. The LED, thus, specifically may be a blue LED. The LED may be configured for generating the primary light, also referred to as the "pump light". Thus, the LED may also be referred to as the "pump LED". The LED specifically may comprise at least one LED chip and/or at least one LED die. Thus, the semiconductor element of the LED may comprise an LED bare chip.

Various types of LEDs suitable for generating the primary light are known to the skilled person and may also be applied in the present invention. Specifically, p-n-diodes may be used. As an example, one or more LEDs selected from the group of an LED on the basis of indium gallium nitride (InGaN), an LED on the basis of GaN, an LED on the basis of InGaN/GaN alloys or combinations thereof and/or other LEDs may be used. Additionally or alternatively, quantum well LEDs may also be used, such as one or more quantum well LEDs on the basis of InGaN. Additionally or alternatively, Superluminescence LEDs (sLED) and/or Quantum cascade lasers may be used.

The at least one luminescent material, thus, may form at least one converter, also referred to as a light converter, transforming primary light into secondary light having different spectral properties as compared to the primary light. Specifically, a spectral width of the secondary light may be larger than a spectral width of the primary light, and/or a center of emission of the secondary light may be shifted, specifically red-shifted, compared to the primary light. Specifically, the at least one luminescent material may have an absorption in the ultraviolet and/or blue spectral range and an emission in the near-infrared and/or infrared spectral range. Thus, generally, the luminescent material or converter may form at least one component of the phosphor LED converging primary light or pump light, specifically in the blue spectral range, into light having a longer wavelength, e.g. in the near-infrared or infrared spectral range.

The term "luminescence" as used herein is a broad term and is to be given its ordinary and customary meaning to a person of ordinary skill in the art and is not to be limited to a special or customized meaning. The term specifically may refer, without limitation, to the process of spontaneous emission of light by a substance not resulting from heat. Specifically, luminescence may refer to a cold-body radiation. More specifically, the luminescence may be initiated or excited by irradiation of light, in which case the luminescence is also referred to as "photoluminescence". The property of a material being capable of performing luminescence, in the context of the present invention, is referred to by the adjective "luminescent". The at least one luminescent material specifically may be a photoluminescent material, i.e. a material which is capable of emitting light after absorption of photons or excitation light. Specifically, the luminescent material may have a positive Stokes shift, which generally may refer to the fact that the secondary light is red-shifted with respect to the primary light.

The at least one luminescent material, thus, may form at least one converter, also referred to as a light converter, transforming primary light into secondary light having different spectral properties as compared to the primary light. Specifically, a spectral width of the secondary light may be larger than a spectral width of the primary light, and/or a center of emission of the secondary light may be shifted, specifically red-shifted, compared to the primary light. Specifically, the at least one luminescent material may have an absorption in the ultraviolet and/or blue spectral range and an emission in the near-infrared and/or infrared spectral range. Thus, generally, the luminescent material or converter may form at least one component of the phosphor LED converging primary light or pump light, specifically in the blue spectral range, into light having a longer wavelength, e.g. in the near-infrared or infrared spectral range.

Various types of conversion and/or luminescence are known and may be used in the context of the present invention. Thus, specifically, the conversion can occur via a dipole-allowed transition in the luminescent material, also referred to as fluorescence, and/or via a dipole-forbidden, thus long-lived, transition in the luminescent material, often also referred to as phosphorescence. The luminescent material, specifically, may, thus, form at least one converter or light converter. The luminescent material may form at least one of a converter platelet, a luminescent and specifically a fluorescent coating on the LED and phosphor coating on the LED. The luminescent material may, as an example, comprise one or more of the following materials: Cerium-doped YAG (YAG:Ce$^{3+}$, or Y$_3$Al$_5$O$_{12}$:Ce$^{3+}$); rare-earth-doped Sialons; copper- and aluminum-doped zinc sulfide (ZnS:Cu,Al).

The LED and the luminescent material, together, may form a so-called "phosphor LED". Consequently, the term "phosphor light-emitting diode" or briefly "phosphor LED", as used herein, is a broad term and is to be given its ordinary and customary meaning to a person of ordinary skill in the art and is not to be limited to a special or customized meaning. The term specifically may refer, without limitation, to a combination of at least one light-emitting diode configured for generating primary light or pump light, and at least one luminescent material, also referred to as a "phosphor", configured for light-conversion of the primary light generated by the light-emitting diode. The phosphor LED may form a packaged LED light source, including the LED die, e.g. a blue LED emitting blue pump light, as well as the phosphor, which, as an example, fully or partially coats the LED, which is, as an example, configured for converting the primary light or blue light into light having differing spectral properties, specifically into near-infrared light. Generally, the phosphor LED may be packaged in one housing or may be unpackaged. Thus, the LED and the at least one luminescent material for light-conversion of the primary light generated by the light-emitting diode may specifically be housed in a common housing. Alternatively, however, the LED may also be an unhoused or bare LED which may fully or partially be covered with the luminescent material, such as by disposing one or more layers of the luminescent material on the LED die. The phosphor LED, generally, may form an emitter or light source by itself.

The at least one luminescent material specifically may form at least one layer. Generally, various alternatives of positioning the luminescent material with respect to the light-emitting diode are feasible, alone or in combination. Firstly, the luminescent material, e.g., at least one layer of the luminescent material, such as the phosphor, may be positioned directly on the light-emitting diode, which is also referred to as a "direct attach", e.g. with no material in between the LED and the luminescent material or with one or more transparent materials in between, such as with one or more transparent materials, specifically transparent for the primary light, in between the LED and the luminescent material. Thus, as an example, a coating of the luminescent material may be placed directly or indirectly on the LED. Additionally or alternatively, the luminescent material, as an example, may form at least one converter body, such as at least one converter disk, which may be placed on top of the LED, e.g. by adhesive attachment of the converter body to the LED. Additionally or alternatively, the luminescent material may also be placed in a remote fashion, such that the primary light from the LED has to pass an intermediate optical path before reaching the luminescent material. This placement may also be referred to as a "remote placement" or as a "remote phosphor". Again, as an example, the luminescent material in the remote placement may form a solid body or converter body, such as a disk or converter disk.

Further, in case of the remote placement, the luminescent material may also be a coating. In particular, an object which is transmitting light, e.g. a thin glass substrate, module window, comprising and/or being made of glass or plastics, may be coated with the phosphor. Alternatively, a reflective surface may be coated with the phosphor. This could be a flat or rough mirror, which may comprise and/or be made of a high-reflective index material substrate, e.g. silicon, or a gold, silver, aluminum or chromium coated flat or rough surface, e.g. glass, or a plastic. In the intermediate optical path, one or more optical elements may be placed, such as one or more of a lens, a prism, a grating, a mirror, an aperture or a combination thereof. Thus, specifically, an optical system having imaging properties may be placed in between the LED and the luminescent material, in the intermediate optical path. Thereby, as an example, the primary light may be focused, or bundled onto the converter body.

The verb "to detect" as used herein is a broad term and is to be given its ordinary and customary meaning to a person of ordinary skill in the art and is not to be limited to a special or customized meaning. The term specifically may refer, without limitation, to the process of at least one of determining, measuring and monitoring at least one parameter, qualitatively and/or quantitatively, such as at least one of a physical parameter, a chemical parameter and a biological parameter. Specifically, the physical parameter may be or may comprise an electrical parameter. Consequently, the term "detector" as used herein is a broad term and is to be given its ordinary and customary meaning to a person of ordinary skill in the art and is not to be limited to a special or customized meaning. The term specifically may refer, without limitation, to an arbitrary device configured for detecting, i.e. for at least one of determining, measuring and monitoring, at least one parameter, qualitatively and/or quantitatively, such as at least one of a physical parameter, a chemical parameter and a biological parameter. The detector may be configured for generating at least one detector signal, more specifically at least one electrical detector signal, such as an analogue and/or a digital detector signal, the detector signal providing information on the at least one parameter measured by the detector. The detector signal may directly or indirectly be provided by the detector to the evaluation unit, such that the detector and the evaluation unit may be directly or indirectly connected. The detector signal may be used as a "raw" detector signal and/or may be processed or preprocessed before further used, e.g. by filtering and the like. Thus, the detector may comprise at least one processing device and/or at least one preprocessing device, such as at least one of an amplifier, an analogue/digital converter, an electrical filter and a Fourier transformation.

The detector may be or may comprise at least one optical detector. The optical detector may be configured for determining at least one optical parameter, such as an intensity and/or a power of light by which at least one sensitive area of the detector is irradiated. More specifically, the optical detector may comprise at least one optical sensor, such as at least one of a photodiode, a photocell, a photosensitive resistor, a phototransistor, a thermophile sensor, a photoacoustic sensor, a pyroelectric sensor, a photomultiplier and a bolometer. The detector, thus, may be configured for generating at least one detector signal, more specifically at least one electrical detector signal, in the above-mentioned sense, providing information on at least one optical parameter, such as the power and/or intensity of light by which the detector or a sensitive area of the detector is illuminated.

The detector comprises a plurality of photosensitive element. The term "photosensitive element" as used herein is a broad term and is to be given its ordinary and customary meaning to a person of ordinary skill in the art and is not to be limited to a special or customized meaning. The term specifically may refer, without limitation, to a single optically sensitive element or area. Specifically, the detector may be or may comprise at least one detector array, more specifically an array of photosensitive elements. Each of the photosensitive elements may comprise at least a photosensitive area which may be adapted for generating an electrical signal depending on the intensity of the incident light, wherein the electrical signal may, in particular, be provided to the evaluation unit, as will be outlined in further detail below. The photosensitive area as comprised by each of the photosensitive elements may, especially, be a single, uniform photosensitive area which is configured for receiving the incident light which impinges on the individual photosensitive elements. However, other arrangements of the photosensitive elements may also be conceivable.

The plurality of photosensitive elements may be designed to generate detector signals, preferably electronic signals, associated with the intensity of the incident light which impinges on the individual photosensitive elements. The detector signal may be an analogue and/or a digital signal. The electronic signals for adjacent pixelated elements can, accordingly, be generated simultaneously or else in a temporally successive manner. By way of example, during a row scan or line scan, it is possible to generate a sequence of electronic signals which correspond to the series of the individual photosensitive elements which are arranged in a line. In addition, the individual photosensitive elements may, preferably, be active pixel sensors which may be adapted to amplify the electronic signals prior to providing it to the evaluation unit. For this purpose, the detector may comprise one or more signal processing devices, such as one or more filters and/or analogue-digital-converters for processing and/or preprocessing the electronic signals.

In case the detector comprises an array of photosensitive elements, the detector, as an example, may be selected from any known pixel sensor, in particular, from a pixelated organic camera element, preferably, a pixelated organic camera chip, or from a pixelated inorganic camera element, preferably, a pixelated inorganic camera chip, more preferably from a CCD chip or a CMOS chip, which are, commonly, used in various cameras nowadays. As an alternative, the detector generally may be or comprise a photoconductor, in particular an inorganic photoconductor, especially PbS, PbSe, Ge, InGaAs, ext. InGaAs, InSb, or HgCdTe. As a further alternative, the detector may comprise at least one of pyroelectric, bolometer or thermophile detector elements. Thus, a camera chip having a matrix of 1 x N pixels or of M x N pixels may be used here, wherein, as an example, M may be < 10 and N may be in the range from 1 to 50, preferably from 2 to 20, more preferred from 5 to 10. Further, a monochrome camera element, preferably a monochrome camera chip, may be used, wherein the monochrome camera element may be differently selected for each photosensitive element, especially, in accordance with the varying wavelength along the series of the optical sensors.

The array may be adapted to provide a plurality of the electrical signals which may be generated by the photosensitive areas of the photosensitive elements comprised by the array. The electrical signals as provided by the array of the spectrometer device may be forwarded to the evaluation unit.

The plurality of photosensitive elements may be sensitive to differing, specifically not overlapping, wavelength intervals. For example, a first photosensitive element may detect light within a first wavelength range and a second photosensitive element may detect light within a second wavelength range, wherein the first and the second wavelength range may be different from each other, particularly in a manner that wavelength ranges do not overlap. Additionally, further photosensitive elements may detect light within further wavelength ranges, wherein the further wavelength ranges may be different from each other and from the first and second wavelength ranges, particularly not overlapping.

As outlined above, the detector is arranged to detect the detection light at an angle with respect to the illumination light. The term "angle" as used herein is a broad term and is to be given its ordinary and customary meaning to a person of ordinary skill in the art and is not to be limited to a special or customized meaning. The term specifically may refer, without limitation, to a size of an opening between two rays. Specifically, the angle may be a quantitative size of the opening between two rays characterized by a magnitude of smallest rotation that maps one of the rays into the other. The angle may comprise an angle between the illumination light and the detection light. Specifically, the angle may quantify a size of opening between a chief ray of the illumination light and a chief ray of the detection light. The angle may specifically be an acute angle between the illumination light and the detection light. The angle may comprise an angle enclosed by the chief ray of the illumination light and the chief ray of the detection light. The angle may be in the range of 0° to 90°, specifically in the range of 15° to 75°, more specifically in the range of 30° to 70°, more specifically in the range of 45° to 65°.

The term "to evaluate", as used herein, is a broad term and is to be given its ordinary and customary meaning to a person of ordinary skill in the art and is not to be limited to a special or customized meaning. The term specifically may refer, without limitation, to the process of processing at least one first item of information in order to generate at least one second item of information thereby. Consequently, the term "evaluation unit", as used herein, is a broad term and is to be given its ordinary and customary meaning to a person of ordinary skill in the art and is not to be limited to a special or customized meaning. The term specifically may refer, without limitation, to an arbitrary device or a combination of devices configured to evaluate or process at least one first item of information, in order to generate at least one second item of information thereof. Thus, specifically, the evaluation unit may be configured for processing at least one input signal and to generate at least one output signal thereof. The at least one input signal, as an example, may comprise the plurality of detector signals provided directly or indirectly by the at least one detector.

As an example, the evaluation unit may be or may comprise one or more integrated circuits, such as one or more application-specific integrated circuits (ASICs), and/or one or more data processing devices, such as one or more of computers, digital signal processors (DSP), field programmable gate arrays (FPGA) preferably one or more microcomputers and/or microcontrollers. Additional components may be comprised, such as one or more preprocessing devices and/or data acquisition devices, such as one or more devices for receiving and/or preprocessing of the detector signals, such as one or more AD-converters and/or one or more filters. Further, the evaluation unit may comprise one or more data storage devices. Further, the evaluation unit may comprise one or more interfaces, such as one or more wireless interfaces and/or one or more wire-bound interfaces.

The at least one evaluation unit may be adapted to execute at least one computer program, such as at least one computer program performing or supporting the step of generating the items of information. As an example, one or more algorithms may be implemented which, by using the plurality of detector signals as input variables, may perform a predetermined transformation for deriving the item of relative detector signal information. Additionally, one or more algorithms may be implemented which, by using the item of relative detector signal information as input variables, may perform a predetermined transformation for deriving the distance between the object and the spectrometer device. For this purpose, the evaluation unit may, particularly, comprise at least one data processing device, also referred to as a processor, in particular an electronic data processing device, which can be designed to generate the desired information by evaluating the plurality of detector signals and/or the item of relative detector signal information. The evaluation unit may use an arbitrary process for generating the required information, such as by calculation and/or using at least one stored and/or known relationship. The evaluation unit specifically may be configured for performing at least one digital signal processing (DSP) technique on the primary detector signals or any secondary detector signals derived thereof. Additionally or alternatively, the evaluation unit may be configured for performing one or more further digital signal processing techniques on the primary detector signals or any secondary detector signals derived thereof, e.g. windowing, filtering, Goertzel algorithm, cross-correlation and autocorrelation. Besides the detector signals, one or a plurality of further parameters and/or items of information can influence said relationship. The relationship can be determined or determinable empirically, analytically or else semi-empirically. As an example, the relationship may comprise at least one of a model or calibration curve, at least one set of calibration curves, at least one function or a combination of the possibilities mentioned. One or a plurality of calibration curves can be stored for example in the form of a set of values and the associated function values thereof, for example in a data storage device and/or a table. Alternatively or additionally, however, the at least one calibration curve can also be stored for example in parameterized form and/or as a functional equation. Separate relationships for processing the detector signals into the item of relative detector signal information and/or the distance may be used. Alternatively, at least one combined relationship for processing the detector signals is feasible. Various possibilities are conceivable and can also be combined.

The method comprises the following steps that may be performed in the given order. However, a different order may also be possible. In particular, one, more than one or even all of the method steps may be performed once or repeatedly. Further, the method steps may be performed successively or, alternatively, one or more of the method steps may be performed in a timely overlapping fashion or even in a parallel fashion and/or in a combined fashion. The method may further comprise additional method steps that are not listed.

The method comprises the following steps:

a) illuminating the object by using the light source;
b) generating a plurality of detector signals by using the detector, wherein the plurality of detector signals comprises at least one detector signal from each photosensitive element;
c) evaluating, by using the evaluation unit, the plurality of detector signals to obtain at least one item of relative detector signal information;
d) determining a distance between the object and the spectrometer device using the item of relative detector signal information; and
e) evaluating the plurality of detector signals from the photosensitive elements to derive the spectroscopic information in case the distance is within at least one predefined distance range.

The term "item of relative detector signal information" as used herein is a broad term and is to be given its ordinary and customary meaning to a person of ordinary skill in the art and is not to be limited to a special or customized meaning. The term specifically may refer, without limitation, to an item of information characterizing at least one relation between two or more detector signals. Specifically, the item of relative detector signal information may comprise at least one item of information characterizing at least one relation between two or more detector signals from two or more different photosensitive elements. The relation may comprise one or more of a qualitative relation, such as a relation indicating a classification and/or order of the detector signals, e.g. with respect to a specific or predetermined detectors signal, and/or a quantitative relation, such as a relation in parameterized form and/or as a functional equation. The item of relative detector signal information may comprise at least one of: an item of difference information comprising information on at least one difference between at least two of the detector signals; an item of quotient information comprising information on at least one quotient between at least two of the detector signals. The item of relative detector signal information may specifically be configured for deriving a distance information between the object and the spectrometer device.

The term "distance" as used herein is a broad term and is to be given its ordinary and customary meaning to a person of ordinary skill in the art and is not to be limited to a special or customized meaning. The term specifically may refer, without limitation, to an item of information indicating a spatial separation of two points or objects. Specifically, the distance between two points or objects may be a length of a straight line in space between the two points or object, in particular defining a shortest possible path. The distance between the object and the spectrometer device may comprise a length of spatial separation between the object and the spectrometer device. The distance may specifically comprise a quantitative indication of the spatial separation of the object and the spectrometer device.

The term "determining" as used herein is a broad term and is to be given its ordinary and customary meaning to a person of ordinary skill in the art and is not to be limited to a special or customized meaning. The term specifically may refer, without limitation, to a process of qualitatively and/or quantitatively processing of at least one first item of information in order to derive at least one second item of information therefrom. Specifically, the determining of the distance between the object and the spectrometer device may comprise qualitatively and/or quantitatively processing the item of relative detector signal information in order to derive the distance. A result of the determination of the distance between the object and the spectrometer device may comprise a quantitative indication of the spatial separation of the object and the spectrometer device. Alternatively or additionally, a result of the determination of the distance between the object and the spectrometer device may comprise a qualitative indication of the spatial separation of the object and the spectrometer, such as an indication if the distance is above and/or below one or more threshold values.

The term "predefined distance range" as used herein is a broad term and is to be given its ordinary and customary meaning to a person of ordinary skill in the art and is not to be limited to a special or customized meaning. The term specifically may refer, without limitation, to a target range of a distance, specifically a target range of a distance between the object and the spectrometer device. The distance range may specifically be defined and/or determined prior to the performing of the method and, thus, may be referred to as "predefined". The predefined distance range may specifically comprise a distance range for operation of the spectrometer device. For example, the spectrometer device may be optimized for being operated in a certain range of distance to the object, in particular by optimizing and/or adapting an optical path of one or more of the illumination light and the detection light for this distance range. Thus, as an example, the plurality of detector signals may comprise accurate detector signals when having the spectrometer device distanced at a distance in the predefined distance range. In the predefined distance range, the spectroscopic information may be directly derived from the plurality of detector signals when having the spectrometer device distanced at a distance in the predefined distance range, in particular without the need for signal correction. The predefined distance range may comprise a range from 0.1 cm to 100 cm, specifically from 0.1 cm to 50 cm, more specifically from 1 cm to 10 cm. In the predefined distance range, the spectrometer device may be configured for providing a sufficient signal-to-noise ratio in the plurality of detector signals to enable evaluation of the spectroscopic information from the plurality of detector signals. In case the distance between the object and the spectrometer device is outside the predetermined distance range, the plurality of detector signal may have a decreased signal level causing a low signal-to-noise ratio and/or may comprise an offset, which, specifically, may adversely affect evaluation of the plurality of detector signals. Specifically, detector signals generated outside the predefined distance range may require extensive correction and/or compensation to allow evaluation of the spectroscopic information therefrom, e.g. by using multiplication factors or the like which account for a specific detrimental distance between the object and the spectrometer device.

Further, in case the distance is not within the predefined distance range, the method may comprise taking at least one action selected from the group consisting of: performing at least one user guidance guiding a user of the spectrometer device to the predefined distance range; aborting the method of obtaining at least one spectroscopic information on at least one object; preventing the deriving of the spectroscopic information; preventing a presentation of the spectroscopic information to a user.

The plurality of photosensitive elements may comprise at least three photosensitive elements being arranged in an array, specifically a linear array. The distance may be determined by comparing the detector signals from the three photosensitive elements. For example, the item of relative detector signal information may comprise at least one item of difference information comprising information on at least one difference between at least two of the detector signals from different photosensitive elements. The distance may be determined by triangulation using them item of relative detector signal information.

Thus, specifically, step b) may comprise generating at least one first detector signal for a first photosensitive element, at least one second detector signal for a second photosensitive element and at least one third detector signal for a third photosensitive element. The item of relative detector signal information may comprise at least one first item of relative detector signal information comprising a difference between the first detector signal and the second detector signal. The item of relative detector signal information may further comprise at least one second item of relative detector signal information comprising a difference between the second detector signal and the third detector signal. Step d) may comprise determining at least one first item of distance information from the first item of relative detector signal information and at least one second item of distance information from the second item of relative detector signal information. The distance may be determined by triangulation using the first item of distance information and the second item of distance information.

The determination of the spectroscopic information at the spectrometer device may specifically be combined with a triangulation measurement. Triangulation as such is known to the skilled person. The illumination light may be guided to measured object and different distances may be imaged via the detection light to the detector, e.g. an array detector, under an angle from the side. If the object is distanced too close to the spectrometer device, the detection light may be imaged to one side of the detector. If the object is distanced too far from the spectrometer device, the detection light may be imaged to the other side of the detector. In a position of the object within the predefined distance range, the detection light may be imaged to the center of the detector. Thus, as an example, the detector may comprise the three photosensitive elements being arranged in an array, specifically a linear array, such as a detector array of three optically active pixels, wherein an extension of the array may define a distance axis. The detector may also comprise more than three photosensitive elements. The distance of the object may be determined by comparing the intensities of the detector signals of the photosensitive elements along the distance axis. Additionally, the detector may comprise an additional axis of extension defining a spectral axis. Thus, in this case, the detector may comprise a two-dimensional array of the plurality of photosensitive elements. The measurement of the spectroscopic information may be performed on the spectral axis of the detector. For example, a two-dimensional detector array may detect different wavelength on a first axis and the distance on a second axis. In case of varying distance of the object with respect to the spectrometer device, the detection light may be imaged may move along the distance axis and may be detected by e.g. by different detector rows and/ lines. By comparing the detector signals from the different photosensitive elements in the rows and/or lines, the evaluation unit may be configured for determining the position and/or the distance of the object.

As an example, the detector signal of the photosensitive elements may each comprise a single peak in different distances. Each peak may represent a specific distance of the object to the spectrometer device. The position between the peaks may be calculated by determining the difference in signal intensity. Alternatively or additionally, the detector signal of the photosensitive elements may show a plateau for each pixel at a distance within the predefined distance range. The detector signal may rise for different distances for each photosensitive element towards the plateau. The distance may be determined by the difference between each detector signal.

Alternatively or additionally, the spectrometer device may further comprise at least one distance sensor. The method may further comprise determining the distance between the object and the spectrometer device using the distance sensor. The distance sensor may comprise at least one of a triangulation sensor and a time-of-flight (ToF) sensor. The distance sensor may specifically an additional sensor of the spectrometer device, such as an additional distance sensor independent from the detector. For example, the distance sensor may be combined with the spectrometer device in a common housing. The distance sensor may be embodied identical or different to the detector. For example, the detector may comprise PbS photosensitive element and silicon detectors for the distance measurement.

Alternatively or additionally, the plurality of photosensitive elements may be arranged in a two-dimensional array. The item of relative detector signal information may be obtained by evaluating detector signals from two photosensitive elements being arranged to detect detection light at different angles with respect to the illumination light. The item of relative detector signal information may be obtained by evaluating detector signals from the two photosensitive elements having the largest deviation in their angles. The determining of the distance may comprise determining that the distance is within the predefined distance range. The distance may be determined to be within the predefined distance range if the term of relative detector signal information indicates a relative deviation of the detector signals by no more than 20%, specifically by no more than 15%, more specifically by no more than 10%. Specifically, these small deviations in the detector signal may be achieved using detector signals from photosensitive elements detecting the same or similar wavelength range. Otherwise, in case of a different wavelength range, the characteristic of the light source for different wavelengths may deviate and may have to be characterized beforehand.

For example, nine photosensitive elements may be arranged in a two-dimensional array. The photosensitive elements may be arranged to receive detection light with different incident angles. The distance may be determined using two photosensitive elements collecting detection light from different incident angles, specifically collecting detection light with the largest deviation in the incident angles. Different incident angles $\alpha$ and $\beta$ may allow for detection of optimal object position, i.e. for detecting the distance of the object and the spectrometer device to be in the predefined distance range, by detecting the same intensity $I_{max}$ on the two photosensitive elements or a deviation in the detector signals by no more than 10% from each other. In case the distance is outside the predefined distance range, the detector signals of the two photosensitive element may differ from each other such that $I_\alpha > I_\beta$ for $\beta < \alpha$.

Alternatively or additionally, at least one of the detector signals of the two photosensitive elements may be corrected by at least one of a Lambertian loss correction and a Fresnel loss correction. The Lambertian loss correction may comprise a correction factor $L = cos(\phi_{ref})/cos(<\phi_i)$, wherein $\Phi_{ref}$ denotes a reference angle and $\phi_i$ denotes the angle of the photosensitive element to be corrected. The reference angle may specifically be an arbitrary angle, e.g. a highest angle of the photosensitive element, a lowest angle of the photosensitive element and/or an average angle over a part or all of the photosensitive element. The Fresnel loss correction may comprise a correction factor

$$F = T_{ref}/T_\alpha = (1 - r_{ref}^2)/(1 - r_\alpha^2)$$

, wherein $T_{ref}$ denotes a transmittance of a reference path, wherein $T_\alpha$ denotes a transmittance of a path to be corrected and $r_i$ denotes a reflectivity coefficient of the reference path and the path to be corrected, respectively. The distance may specifically be determined using the at least one corrected detector signal.

Generally, the deviation between the angles $\alpha$ and $\beta$ may cause angle-dependent signal losses when the detection light passes surfaces, e.g. a window of the spectrometer device. These angle-dependent signal losses may appear predominantly due to Fresnel loss and Lambertian radiation loss at a surface. The Lambertian radiation characteristic may describe reflections on surfaces. The Lambertian intensity distribution may be determined via $I_\varphi = I_0 \cdot cos\ \varphi,$ wherein $I_\varphi$ denotes an intensity of light scattered under angle $\varphi$ with respect to the normal surface, wherein $I_0$ denotes an intensity of light scattered perpendicular to the surface. With increasing angle $\varphi$, the intensity of light may decrease, specifically resulting in a circular intensity distribution. The Lambertian radiation characteristic may depend strongly on a material of the surface and, thus, may be material specific. The Lambertian radiation characteristic may result in that light scattered with an angle $\varphi = 0$ has the

highest intensity $I_0$ and that the intensity of light scattered under angle $\varphi$ with respect to the normal surface decreases.

The Fresnel loss, specular reflection loss, may generally refer to light reflections occurring when light passes optical components, such as lenses or surfaces or the like. Upon passing the optical component, some amount of light may be reflected. For example, if a surface is illuminated with an incident angle $\alpha_i$ at the surface interface, one part of the light may be reflected with an angle $\alpha_r$ and another part may be transmitted with the angle $\beta$ into the material enclosed by the surface following Snell's law. With an increasing incident angle $a'_i > \alpha_i$, the amount of reflected light may increase resulting in less transmitted light into the material. Specifically, the higher the incident angle $\alpha_i$ of light onto the surface, the more photons may be reflected and less photons may be transmitted into the material. This behavior can be described via the Fresnel formula. The Fresnel losses may be determined from the reflectivity coefficient r via the sand p-polarized Fresnel equations:

$$r_s = \frac{n_1 \cos \alpha - n_2 \cos \beta}{n_1 \cos \alpha + n_2 \cos \beta},$$

$$r_p = \frac{n_2 \cos \alpha - n_1 \cos \beta}{n_2 \cos \alpha + n_1 \cos \beta},$$

wherein $n_1$ denotes a refractive index of a medium comprising the incident light, wherein $n_2$ denotes a refractive index of a medium comprising the transmitted light.

If s- and p-polarized light is considered equally, the reflection can be calculated according to:

$$r = 0.5 r_s + 0.5 r_p.$$

Thus, collecting detection light with large angles compared to the illumination light may lead to a loss of intensity due to radiation characteristics of the sample or Fresnel reflections on a surface of the spectrometer device. In particular, having the spectrometer device embodied with nine photosensitive elements arranged in the two-dimensional array detecting a discrete number of wavelengths with different collection angles may result in a non-homogeneous signal level of the detector signals for the different photosensitive elements. The signal levels may even be different for detection of similar wavelengths but different collection angles at the photosensitive elements. The correction factors $L$ and $F$ for the Lambertian losses and the Fresnel losses, respectively, may provide a correction of these adverse effects. The impact of Lambertian losses $L$ due to angle dependent radiance characteristics may be calculated from a ratio:

$$L = \frac{\cos \varphi_{ref}}{\cos \varphi}.$$

The ratio $L$ may be determined depending on a reference angle $\varphi_{ref}$, specifically any angle for one of the photosensitive elements to which the radiation characteristics are corrected. The impact of Fresnel losses may be calculated as the ratio $F$ of the transmittance $T$ for the reference path having angle $\beta$ to a path to be corrected having an actual angle $\alpha$:

$$F = \frac{T_{ref}}{T_\alpha} = \frac{1 - r_{ref}^2}{1 - r_\alpha^2}.$$

The correction factors $L$ and $F$ may be used as correction factors for the detector signals, e.g. by multiplying $L$ and/or $F$ with the respective detector signal. Applying one or more of the correction factors $L$ and $F$ may result in a reduction of adverse effects of Fresnel losses and/or Lambertian losses on the detector signals.

The method may further comprise determining at least one item of spatial orientation of the object with respect to the spectrometer device using the item of relative detector signal information. Specifically, the item of spatial orientation may comprise at least one orientation angle of a surface normal of the object with respect to the spectrometer device. The orientation angle may specifically comprise an angle between the surface normal of the objects' surface and a direction defined by the illumination light from the spectrometer device illuminating the object. The evaluating of the plurality of detector signals from the photosensitive elements to derive the spectroscopic information may be performed in case the orientation angle is below a threshold angle. As an example, the evaluating of the plurality of detector signals may be allowed in case the orientation angle of the object with respect to the spectrometer device is below a threshold angle of 45°, specifically below 30°, more specifically below 10°.

The method may further comprise at least one user guidance guiding a user of the spectrometer device to the predefined distance range between the object and the spectrometer device. The user guidance may specifically comprise automatically guiding the user to a predefined or predetermined distance between the object and the spectrometer device. The user guidance may comprise at least one of an optical feedback, an acoustical feedback and a haptic feedback to the user. Thus, the user of the spectrometer device, specifically of a mobile device comprising the spectrometer device, may be guided by optical, acoustical and/or haptic feedback to move the object closer to the spectrometer device and/or to increase the distance.

The method may be at least partially computer-implemented, specifically at least one of steps c) to e). The term "computer-implemented" as used herein is a broad term and is to be given its ordinary and customary meaning to a person of ordinary skill in the art and is not to be limited to a special or customized meaning. The term specifically may refer, without limitation, to a method involving at least one computer and/or at least one computer network and/or at least one computing unit, such as the evaluation unit of the spectrometer device. The computing unit may comprise at least one processor which is configured for performing at least one of the method steps c) to e). Preferably each of the method steps c) to e) may be performed by the computing unit. The method steps c) to e) may be performed completely automatically, specifically without user interaction. Method steps a) and/or b) may be computer-controlled, such by using at least one computing unit, e.g. the evaluation unit of the spectrometer device, for controlling the spectrometer device to perform method steps a) and/or b).

In a further aspect of the present invention, a spectrometer device for obtaining at least one spectroscopic information on at least one object is disclosed. For definitions of terms and/or possible embodiments of the spectrometer device or any part thereof, reference is made to the description of the method above.

The spectrometer device comprises:

- at least one light source configured for generating illumination light for illuminating the object;
- at least one detector configured for detecting detection light from the object, wherein the detector comprises a plurality of photosensitive elements, wherein each of the photosensitive elements is configured for generating at least one detector signal in response to illumination by light, wherein the detector is arranged to detect the detection light at an angle with respect to the illumination light; and
- at least one evaluation unit configured for evaluating the detector signals;

The spectrometer device is configured for performing the method of obtaining at least one spectroscopic information on at least one object according to the present invention, such as according to any one of the embodiments disclosed above and/or according to any one of the embodiments disclosed in further detail below. Specifically, the evaluation unit of the spectrometer device may be configured, such as by hardware and/or software programing, for controlling and/or performing method steps a) to e).

In a further aspect of the present invention, a computer program is disclosed, comprising instructions which, when the program is executed by the spectrometer device according to the present invention, such as according to any one of the embodiments disclosed above and/or according to any one of the embodiments disclosed in further detail below, cause the spectrometer device to perform the method of obtaining at least one spectroscopic information on at least one object according to the present invention, such as according to any one of the embodiments disclosed above and/or according to any one of the embodiments disclosed in further detail below.

In a further aspect of the present invention, a computer-readable storage medium, specifically a non-transient computer-readable, is disclosed, comprising instructions which, when the instructions are executed by the spectrometer device according to the present invention, such as according to any one of the embodiments disclosed above and/or according to any one of the embodiments disclosed in further detail below, cause the spectrometer device to perform the method of obtaining at least one spectroscopic information on at least one object according to the present invention, such as according to any one of the embodiments disclosed above and/or according to any one of the embodiments disclosed in further detail below.

As used herein, the term "computer-readable storage medium" specifically may refer to non-transitory data storage means, such as a hardware storage medium having stored thereon computer-executable instructions. The computer-readable storage medium specifically may be or may comprise a storage medium such as a random-access memory (RAM) and/or a read-only memory (ROM). The computer-readable storage medium may comprise at least one computer-readable data carrier.

Referring to the computer-implemented aspects of the invention, one or more of the method steps or even all of the method steps of the method according to one or more of the embodiments disclosed herein may be performed and/or controlled by using a computer or computer network or computing unit. Thus, generally, any of the method steps including provision and/or manipulation of data may be performed and/or controlled by using a computer or computer network or computing unit. Generally, these method steps may include any of the method steps, typically except for method steps requiring manual work, such as providing the samples and/or certain aspects of performing the actual measurements.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present.

As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, nonwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The method and the spectrometer device according to the present invention may have a large number of advantages over known methods and devices of similar kind. Specifically, the method and the spectrometer device may allow for precise and reliable spectroscopic measurements by ensuring correct positioning of the object with respect to the spectrometer device. Further, the method and the spectrometer device may allow spectroscopy measurements being performed with a distance of the object to the spectrometer device. The spectrometer device may be configured for determining the distance to the object enabling user feedback if the object is positioned at a distance in the predefined distance range, such as in a right distance of the spectrometer device, and/or detecting detect false spectroscopic measurements being performed at a false distance. Additionally, the item of relative detector signal information may be used to determine a relative spatial orientation of the object with respect to the spectrometer device. Thus, optionally, the spatial orientation of the spectrometer device with respect to an object surface can be set in addition to the distance for allowing spectroscopic measurements.

Summarizing and without excluding further possible embodiments, the following embodiments may be envisaged:

Embodiment 1: A method of obtaining at least one spectroscopic information on at least one object, wherein the method comprises using at least one spectrometer device, wherein the spectrometer device comprises

- at least one light source configured for generating illumination light for illuminating the object;

- at least one detector configured for detecting detection light from the object, wherein the detector comprises a plurality of photosensitive elements, wherein each of the photosensitive elements is configured for generating at least one detector signal in response to illumination by light, wherein the detector is arranged to detect the detection light at an angle with respect to the illumination light; and

- at least one evaluation unit configured for evaluating the detector signals;

wherein the method comprises the following steps:

a) illuminating the object by using the light source;
b) generating a plurality of detector signals by using the detector, wherein the plurality of detector signals comprises at least one detector signal from each photosensitive element;
c) evaluating, by using the evaluation unit, the plurality of detector signals to obtain at least one item of relative detector signal information;
d) determining a distance between the object and the spectrometer device using the item of relative detector signal information; and
e) evaluating the plurality of detector signals from the photosensitive elements to derive the spectroscopic information in case the distance is within at least one predefined distance range.

Embodiment 2: The method according to the preceding embodiment, wherein, in case the distance is not within the predefined distance range, the method comprises taking at least one action selected from the group consisting of: performing at least one user guidance guiding a user of the spectrometer device to the predefined distance range; aborting the method of obtaining at least one spectroscopic information on at least one object; preventing the deriving of the spectroscopic information; preventing a presentation of the spectroscopic information to a user.

Embodiment 3: The method according to any one of the preceding embodiments, wherein the predefined distance range comprises a range from 0.1 cm to 100 cm, specifically from 0.1 cm to 50 cm, more specifically from 1 cm to 10 cm.

Embodiment 4: The method according to any one of the preceding embodiments, wherein the item of relative detector signal information comprises at least one of: an item of difference information comprising information on at least one difference between at least two of the detector signals; an item of quotient information comprising information on at least one quotient between at least two of the detector signals.

Embodiment 5: The method according to any one of the preceding embodiments, further comprising determining at least one item of spatial orientation of the object with respect to the spectrometer device using the item of relative detector signal information.

Embodiment 6: The method according to the preceding embodiment, wherein the item of spatial orientation comprises at least one orientation angle of a surface normal of the object with respect to the spectrometer device.

Embodiment 7: The method according to the preceding embodiment, wherein the evaluating of the plurality of detector signals from the photosensitive elements to derive the spectroscopic information is performed in case the orientation angle is below a threshold angle.

Embodiment 8: The method according to any one of the preceding embodiments, wherein the plurality of photosensitive elements comprises at least three photosensitive elements being arranged in an array, specifically a linear array, wherein the distance is determined by comparing the detector signals from the three photosensitive elements.

Embodiment 9: The method according to any one of the preceding embodiments, wherein the item of relative detector signal information comprises at least one item of difference information comprising information on at least one difference between at least two of the detector signals from different photosensitive elements.

Embodiment 10: The method according to any one of the preceding embodiments, wherein the distance is determined by triangulation using them item of relative detector signal information.

Embodiment 11: The method according to any one of the preceding embodiments, wherein step b) comprises generating at least one first detector signal for a first photosensitive element, at least one second detector signal for a second photosensitive element and at least one third detector signal for a third photosensitive element.

Embodiment 12: The method according to the preceding embodiment, wherein the item of relative detector signal information comprises at least one first item of relative detector signal information comprising a difference between the first detector signal and the second detector signal, wherein the item of relative detector signal information comprises at least one second item of relative detector signal information comprising a difference between the second detector signal and the third detector signal.

Embodiment 13: The method according to the preceding embodiment, wherein the step d) comprises determining at least one first item of distance information from the first item of relative detector signal information and at least one second item of distance information from the second item of relative detector signal information, wherein the distance is determined by triangulation using the first item of distance information and the second item of distance information.

Embodiment 14: The method according the any one of the preceding embodiments, wherein the spectrometer device further comprises at least one distance sensor, wherein the method further comprises determining the distance between the object and the spectrometer device using the distance sensor.

Embodiment 15: The method according to the preceding embodiment, wherein the distance sensor comprises at least one of a triangulation sensor and a time-of-flight (ToF) sensor.

Embodiment 16: The method according to any one of the preceding embodiments, wherein the plurality of photosensitive elements is arranged in a two-dimensional array, wherein the item of relative detector signal information is obtained by evaluating detector signals from two photosensitive elements being arranged to detect detection light at different angles with respect to the illumination light.

Embodiment 17: The method according to the preceding embodiment, wherein the item of relative detector signal information is obtained by evaluating detector signals from the two photosensitive elements having the largest deviation in their angles.

Embodiment 18: The method according to any one of the two preceding embodiments, wherein the determining of the distance comprises determining that the distance is within the predefined distance range.

Embodiment 19: The method according to any one of the three preceding embodiments, wherein the distance is determined to be within the predefined distance range if the term of relative detector signal information indicates a relative deviation of the detector signals by no more than 20%, specifically by no more than 15%, more specifically by no more than 10%.

Embodiment 20: The method according to any one of the four preceding embodiments, wherein at least one of the detector signals of the two photosensitive elements is corrected by at least one of a Lambertian loss correction and a Fresnel loss correction.

Embodiment 21: The method according to the preceding embodiment, wherein the Lambertian loss correction comprises a correction factor $L = cos(\phi_{ref})/cos(\phi_i)$, wherein $\Phi_{ref}$ denotes a reference angle and $\phi_i$ denotes the angle of the photosensitive element to be corrected.

Embodiment 22: The method according to any one of the two preceding embodiments, wherein the Fresnel loss correction comprises a correction factor

$$F = T_{ref}/T_\alpha = (1 - r_{ref}^2)/(1 - r_\alpha^2)$$,

wherein $T_{ref}$ denotes a transmittance of a reference path, wherein $T_\alpha$ denotes a transmittance of a path to be corrected and $r_i$ denotes a reflectivity coefficient of the reference path and the path to be corrected, respectively.

Embodiment 23: The method according to any one of the three preceding embodiments, wherein the distance is determined using the at least one corrected detector signal.

Embodiment 24: The method according to any one of the preceding embodiments, wherein the method further comprises at least one user guidance guiding a user of the spectrometer device to the predefined distance range between the object and the spectrometer device.

Embodiment 25: The method according to the preceding embodiment, wherein the user guidance comprises at least one of an optical feedback, an acoustical feedback and a haptic feedback to the user.

Embodiment 26: The method according to any one of the preceding embodiments, wherein the angle is in the range of 0° to 90°, specifically in the range of 15° to 75°, more specifically in the range of 30° to 70°, more specifically in the range of 45° to 65°.

Embodiment 27: The method according to anyone of the preceding embodiments, wherein the method is at least partially computer-implemented, specifically at least one of steps c) to e).

Embodiment 28: A spectrometer device for obtaining at least one spectroscopic information on at least one object, wherein the spectrometer device comprises:

- at least one light source configured for generating illumination light for illuminating the object;
- at least one detector configured for detecting detection light from the object, wherein the detector comprises a plurality of photosensitive elements, wherein each of the photosensitive elements is configured for generating at least one detector signal in response to illumination by light, wherein the detector is arranged to detect the detection light at an angle with respect to the illumination light; and
- at least one evaluation unit configured for evaluating the detector signals;

wherein the spectrometer device is configured for performing the method of obtaining at least one spectroscopic information on at least one object according to any one of the preceding embodiments.

Embodiment 29: A computer program comprising instructions which, when the program is executed by the spectrometer device according to any one of the preceding embodiments referring to a spectrometer device, cause the spectrometer device to perform the method of obtaining at least one spectroscopic information on at least one object according to any one of the preceding embodiments referring to a method of obtaining at least one spectroscopic information on at least one object.

Embodiment 30: A computer-readable storage medium comprising instructions which, when the instructions are executed by the spectrometer device according to any one of the preceding embodiments referring to a spectrometer device, cause the spectrometer device to perform the method of obtaining at least one spectroscopic information on at least one object according to any one of the preceding embodiments referring to a method of obtaining at least one spectroscopic information on at least one object.

Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.
In the Figures:

Figure 1          shows an embodiment of a spectrometer device for obtaining at least one spectroscopic information on at least one object in a schematic view;

Figure 2          shows a flow chart of an embodiment of a method of obtaining at least one spectroscopic information on at least one object;

Figure 3      shows an embodiment of a detector in a schematic view;

Figures 4A and 4B      show diagrams with exemplary detector signals;

Figure 5      shows a further diagram with an exemplary detector signal; and

Figure 6      shows a diagram of corrected detector signals.

Detailed description of the embodiments

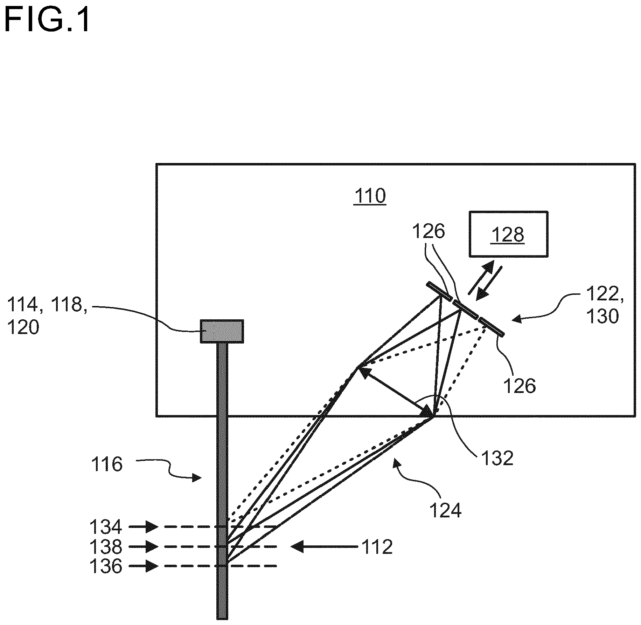

Figure 1 shows an embodiment of a spectrometer device 110 for obtaining at least one spectroscopic information on at least one object 112 in a schematic view. The spectrometer device 110 may specifically be a diffusive reflective spectrometer device configured for acquiring spectral information from the light which is diffusively reflected by the at least one object 112, e.g. by at least one sample. The spectrometer device 110, as an example, may be a portable spectrometer device. Specifically, the portable spectrometer device may be part of a mobile device or may be attachable to a mobile device, such as a notebook computer, a tablet, a cell phone, such as a smartphone, a smartwatch and/or a wearable computer.

The spectrometer device 110 comprises at least one light source 114 configured for generating illumination light 116 for illuminating the object 112. The light source 114 specifically may be or may comprise at least one electrical light source, such as an electrically driven light source. For example, the light source 114 may comprise at least one light-emitting diode 118 and at least one luminescent material 120 for light-conversion of primary light generated by the light-emitting diode 118, wherein, specifically, the illumination light 116 may be a combination of the primary light and light generated by the light-conversion by the luminescent material 120 or light generated by the light conversion of the luminescent material 120, also referred to as secondary light. However, other light sources 114 may also be feasible, such as at least one light source selected from the group consisting of: an incandescent lamp; a light-emitting diode (LED); a laser, specifically a laser diode, a solid-state laser, a gas laser, a quantum cascade laser; a plasma light source; a low pressure discharge lamp, specifically a low pressure fluorescent lamp; a high pressure discharge lamp; an electrical light source.

The spectrometer device 110 further comprises at least one detector 122 configured for detecting detection light 124 from the object 112. The detector 122 comprises a plurality of photosensitive elements 126, wherein each of the photosensitive elements 126 is configured for generating at least one detector signal in response to illumination by light. As shown in Figure 1, the detector 122 is arranged to detect the detection light 124 at an angle with respect to the illumination light 116. The spectrometer device 110 further comprises at least one evaluation unit 128 configured for evaluating the detector signals. Specifically, the detector signal may directly or indirectly be provided by the detector 122 to the evaluation unit 128, such that the detector 122 and the evaluation unit 128 may be directly or indirectly connected.

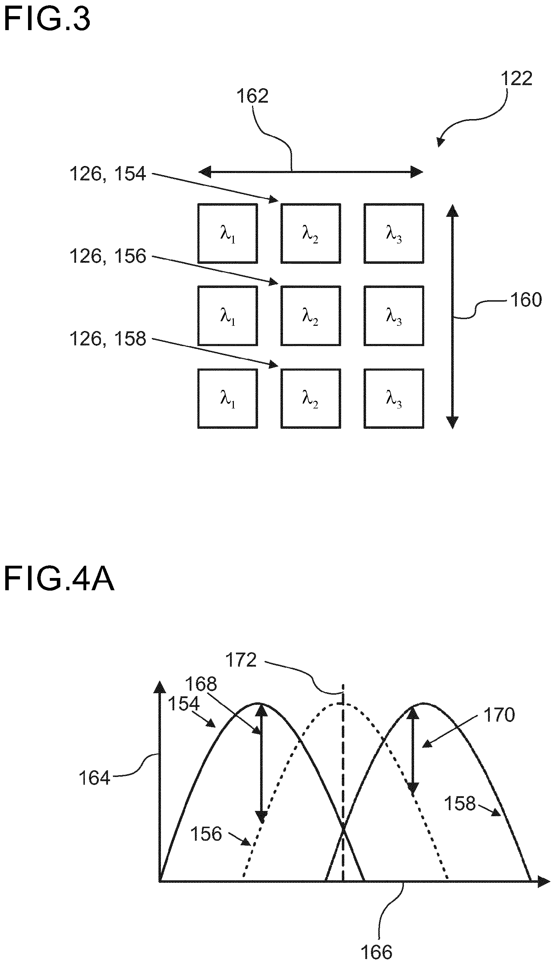

In the example of Figure, the detector 122 may comprise the plurality of photosensitive element 126 arranged in an array 130 of photosensitive elements 126. The detector 122, as an example, may be selected from any known pixel sensor, in particular, from a pixelated organic camera element, preferably, a pixelated organic camera chip, or from a pixelated inorganic camera element, preferably, a pixelated inorganic camera chip, more preferably from a CCD chip or a CMOS chip, which are, commonly, used in various cameras nowadays. As an alternative, the detector 122 generally may be or comprise a photoconductor, in particular an inorganic photoconductor, especially PbS, PbSe, Ge, InGaAs, ext. InGaAs, InSb, or HgCdTe. As a further alternative, the detector 122 comprise at least one of pyroelectric, bolometer or thermophile detector elements. Thus, a camera chip having a matrix of 1 x N pixels or of M x N pixels may be used here, wherein, as an example, M may be < 10 and N may be in the range from 1 to 50, preferably from 2 to 20, more preferred from 5 to 10. Further, a monochrome camera element, preferably a monochrome camera chip, may be used, wherein the monochrome camera element may be differently selected for each photosensitive element 126, especially, in accordance with the varying wavelength along the series of the optical sensors. An exemplary embodiment of the detector 122 is shown in Figure 3 in more detail. Thus, for a detailed description of a pixelated detector, reference is made to the description of Figure 3.

The array 130 may be adapted to provide a plurality of the electrical signals which may be generated by the photosensitive areas of the photosensitive elements 126 comprised by the array 130. The electrical signals as provided by the array 130 of the spectrometer device 110 may be forwarded to the evaluation unit 128.

The plurality of photosensitive elements 126 may be sensitive to differing, specifically not overlapping, wavelength intervals. For example, a first photosensitive element may detect light within a first wavelength range and a second photosensitive element may detect light within a second wavelength range, wherein the first and the second wavelength range may be different from each other, particularly in a manner that wavelength ranges do not overlap. Additionally, further photosensitive elements may detect light within further wavelength ranges, wherein the further wavelength ranges may be different from each other and from the first and second wavelength ranges, particularly not overlapping.

As an example, the spectrometer device 110 further may comprise at least one wavelength-selective element 132, such as at least one of a grating, a prism and a filter, e.g. a length variable filter having varying transmission properties over its lateral extension. The wavelength-selective element 132 may be used for separating incident light into a spectrum of constituent wavelength signals whose respective intensities are determined by employing the detector 122, specifically the detector 122 having the detector array 130.

In Figure 1, the object 112 is shown at different distances to the spectrometer device 110. Specifically, the object 112 is shown at a distance outside a predefined distance range, such as distanced too close to the spectrometer device 110 (denoted by reference number 134) and distanced too far from the spectrometer device 110 (denoted by reference number 136). Further, Figure 1 also shows the object 112 at a distance within the predefined distance range (denoted by reference number 138). As can be seen in Figure 1, as an example, the illumination light 116 may be guided to measured object 112 and different distances may be imaged via the detection light 124 to the detector 122, e.g. to the array 130, under an angle from the side. If the object 112 is distanced too close to the spectrometer device 110, the detection light 124 may be imaged to one side of the detector 122. If the object 112 is distanced too far from the spectrometer device 110, the detection light 124 may be imaged to the other side of the detector 122. In a position of the object 112 within the predefined distance range, the detection light 124 may be imaged to the center of the detector 122.

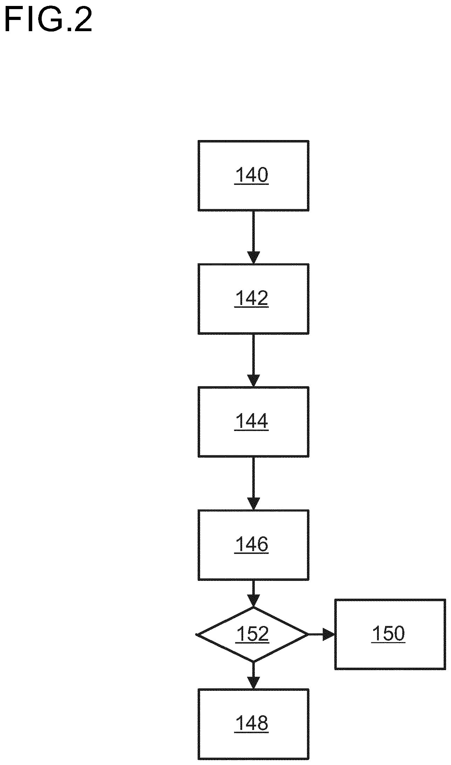

Further, the spectrometer device 110 is configured for performing the method of obtaining at least one spectroscopic information on at least one object 112 according to the present invention, such as according to the exemplary embodiment shown in Figure 2 and/or according to other embodiment disclosed herein. Thus, for a detailed description of the method of obtaining at least one spectroscopic information on at least one object 112, reference is made to the description of Figure 2. Specifically, the evaluation unit 128 of the spectrometer device 110 may be configured, such as by hardware and/or software programing, for controlling and/or performing method steps a) to e), as will be outlined in further detail below.

Figure 2 shows a flow chart of an exemplary embodiment of a method of obtaining at least one spectroscopic information on at least one object 112. The method comprises using at least one spectrometer device 110, specifically at least one spectrometer device 110 as exemplarily shown in Figure 1. Thus, for a detailed description of the spectrometer device 110, reference is made to the description of Figure 1.

The method comprises the following steps that may be performed in the given order. However, a different order may also be possible. In particular, one, more than one or even all of the method steps may be performed once or repeatedly. Further, the method steps may be performed successively or, alternatively, one or more of the method steps may be performed in a timely overlapping fashion or even in a parallel fashion and/or in a combined fashion. The method may further comprise additional method steps that are not listed.

The method comprises the following steps:

a) (denoted by reference number 140) illuminating the object 112 by using the light source 114;
b) (denoted by reference number 142) generating a plurality of detector signals by using the detector 122, wherein the plurality of detector signals comprises at least one detector signal from each photosensitive element 126;
c) (denoted by reference number 144) evaluating, by using the evaluation unit 128, the plurality of detector signals to obtain at least one item of relative detector signal information;
d) (denoted by reference number 146) determining a distance between the object 112 and the spectrometer device 110 using the item of relative detector signal information; and
e) (denoted by reference number 148) evaluating the plurality of detector signals from the photosensitive elements 126 to derive the spectroscopic information in case the distance is within at least one predefined distance range.

Further, in case the distance is not within the predefined distance range, the method may comprise taking at least one action selected from the group consisting of (denoted by reference number 150): performing at least one user guidance guiding a user of the spectrometer device 110 to the predefined distance range; aborting the method of obtaining at least one spectroscopic information on at least one object 112; preventing the deriving of the spectroscopic information; preventing a presentation of the spectroscopic information to a user. Thus, as shown in Figure 2, the method may comprise at least one decision node 152, wherein at decision node 152, the method may comprise determining if the distance between the object 112 and the spectrometer device 110 is within the predefined distance range or not. For example, in case the distance is within the predefined distance range, the method proceeds with method step e). In case the distance is not within the predefined distance range, the method may proceed with a user guidance, an abort of the method, a prevention of the deriving of the spectroscopic information and/or of a presentation of the spectroscopic information to the user.

As shown in Figure 1, the plurality of photosensitive elements 126, as an example, may comprise at least three photosensitive elements 126 being arranged in the array 130, specifically in a linear array. Alternatively or additionally, the detector 122 may also comprise more than three photosensitive elements 126. Figure 3 shows an exemplary embodiment of a two-dimensional array of the plurality of photosensitive elements 126. Thus, as an example, the detector 122 may comprise the three photosensitive elements 126, such as at least one first photosensitive element 154, at least one second photosensitive element 156 and at least one third photosensitive element 158, being arranged in the array 130, specifically a linear array, such as a detector array of three optically active pixels, wherein an extension of the array 130 may define a distance axis 160. Alternatively or additionally, as shown in Figure 3, the detector 122 may comprise an additional axis of extension defining a spectral axis 162. Thus, in this case, the detector 122 may comprise the two-dimensional array of the plurality of photosensitive elements 126. The measurement of the spectroscopic information may be performed on the spectral axis 162 of the detector 122. For example, the two-dimensional detector array may detect different wavelength on a first axis and the distance on a second axis.

The distance may be determined by comparing the detector signals from the three photosensitive elements 126. For example, the item of relative detector signal information may comprise at least one item of difference information comprising information on at least one difference between at least two of the detector signals from different photosensitive elements 126. The distance may be determined by triangulation using them item of relative detector signal information.

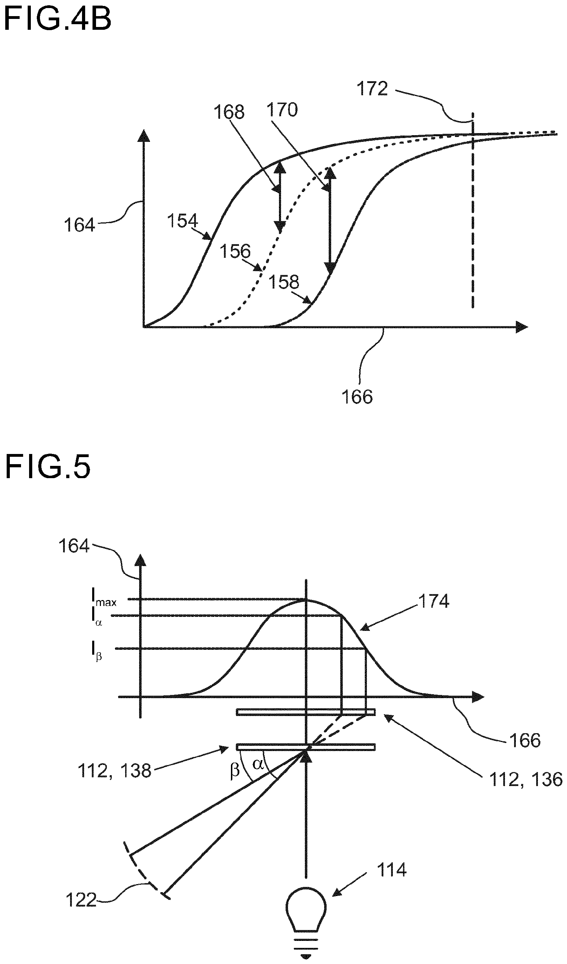

This is shown in Figures 4A and 4B. Specifically, Figures 4A and 4B show diagrams with exemplary detector signals for three photosensitive elements 126. In the diagrams, the intensity 164 of the detector signals is shown as a function of the distance 166.

Specifically, step b) may comprise generating at least one first detector signal for the first photosensitive element 154, at least one second detector signal for the second photosensitive element 15 and at least one third detector signal for the third photosensitive element 158. The item of relative detector signal information may comprise at least one first item of relative detector signal information comprising a difference between the first detector signal and the second detector signal. The item of relative detector signal information may further comprise at least one second item of relative detector signal information comprising a difference between the second detector signal and the third detector signal. Step d) may comprise determining at least one first item of distance information (denoted by reference number 168) from the first item of relative detector signal information and at least one second item of distance information (denoted by reference number 170) from the second item of relative detector signal information. The distance 166 may be determined by triangulation using the first item of distance information and the second item of distance information.

In the examples of Figures 3A and 3B, the photosensitive elements 126 may generate a different detector signal as a function of the distance 166. As an example, as shown in Figure 3A, the detector signal of the photosensitive elements 126 may each comprise a single peak in different distances 166. Each peak may represent a specific distance 166 of the object 112 to the spectrometer device 110. The position between the peaks may be calculated by determining the difference in signal intensity. Alternatively or additionally, as shown in Figure 3B, the detector signal of the photosensitive elements 126 may show a plateau for each pixel at a distance 166 within the predefined distance range. The detector signal may rise for different distances for each photosensitive element 126 towards the plateau. The distance 166 may be determined by the difference between each detector signal. Specifically, an optimal distance 172, e.g. a distance within the predefined distance range, may be determined using the detector signals from the photosensitive elements 126.

Alternatively or additionally, the item of relative detector signal information may be obtained by evaluating detector signals from two photosensitive elements 126 being arranged to detect detection light 124 at different angles with respect to the illumination light 116. This principle is shown in Figure 5. Specifically, shows a diagram of light distribution 174 with the positioning of the object 112 to the spectrometer device 110, in particular to the detector 122.

In this example, the plurality of photosensitive elements 126 may be arranged in the two-dimensional array as exemplarily shown in Figure 3. The item of relative detector signal information may be obtained by evaluating detector signals from the two photosensitive elements 126 having the largest deviation in their angles. The determining of the distance 166 may comprise determining that the distance 166 is within the predefined distance range. The distance 166 may be determined to be within the predefined distance range if the term of relative detector signal information indicates a relative deviation of the detector signals by no more than 20%, specifically by no more than 15%, more specifically by no more than 10%. Specifically, these small deviations in the detector signal may be achieved using detector signals from photosensitive elements 126 detecting the same or similar wavelength range. Otherwise, in case of a different wavelength range, the characteristic of the light source 114 for different wavelengths may deviate and may have to be characterized beforehand.

For example, nine photosensitive elements 126 may be arranged in the two-dimensional array. The photosensitive elements 126 may be arranged to receive detection light 124 with different incident angles. The distance may be determined using two photosensitive elements 126 collecting detection light 124 from different incident angles, specifically collecting detection light 124 with the largest deviation in the incident angles. Different incident angles $\alpha$ and $\beta$ may allow for detection of optimal object position, i.e. for detecting the distance 166 of the object 112 and the spectrometer device 110 to be in the predefined distance range, by detecting the same intensity $I_{max}$ on the two photosensitive elements 126 or a deviation in the detector signals by no more than 10% from each other. In case the distance 166 is outside the predefined distance range, the detector signals of the two photosensitive elements 126 may differ from each other such that $I_\alpha > I_\beta$ for $\beta < \alpha$.

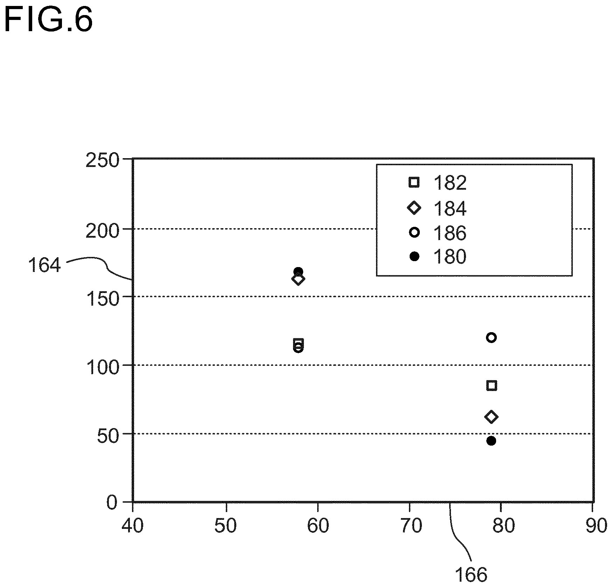

Alternatively or additionally, at least one of the detector signals of the two photosensitive elements 126 may be corrected by at least one of a Lambertian loss correction and a Fresnel loss correction. Figure 6 shows a diagram of corrected detector signals. Specifically, Figure 6 shows a signal level 176 of corrected and uncorrected detector signals for two photosensitive elements 126 having different angles 178.

The Lambertian loss correction may comprise a correction factor $L = cos(\phi_{ref})/cos(\phi_i)$, wherein $\Phi_{ref}$ denotes a reference angle and $\phi_i$ denotes the angle of the photosensitive element 126 to be corrected. The reference angle may specifically be an arbitrary angle, e.g. a highest angle of the photosensitive elements 126, a lowest angle of the photosensitive elements 126 and/or an average angle over a part or all of the photosensitive elements 126. The Fresnel loss correction may comprise a correction factor

$$F = T_{ref}/T_\alpha = (1 - r_{ref}^2)/(1 - r_\alpha^2)$$

, wherein $T_{ref}$ denotes a transmittance of a reference path, wherein $T_\alpha$ denotes a transmittance of a path to be corrected and $r_i$ denotes a reflectivity coefficient of the reference path and the path to be corrected, respectively. The distance 166 may specifically be determined using the at least one corrected detector signal.

In Figure 6, the uncorrected detector signals are denoted by reference number 180, the detectors signals corrected by using the Lambertian loss correction are denoted by reference number 182, the detector signals corrected by using the Fresnel loss correction are denoted by reference number 184 and the detector signals corrected by using both the Lambertian loss correction and the Fresnel loss correction are denoted by reference number 186. As can be seen in Figure 6, the signal level correction may reduce and/or eliminate any angle dependency in the detector signals. The object 112 was positioned at a distance with the predefined distance range. Both detector signals had the same wavelength interval. In the uncorrected case, the detector signals showed a difference of more than 100 counts, which is approximately ~67 %. With the Lambertian loss correction and the Fresnel loss correction, the deviation in the detector signals may be reduced. The best results may be achieved with a combined correction of the Fresnel loss correction and the Lambertian loss correction. After applying both the Lambertian loss correction and the Fresnel loss correction, both detector signals are at approximately 115 counts, which may then be used for distance adjustments.

List of reference numbers

[0109]

| | |
|---|---|
| 110 | spectrometer device |
| 112 | object |
| 114 | light source |
| 116 | illumination light |
| 118 | light-emitting diode |
| 120 | luminescent material |
| 122 | detector |
| 124 | detection light |
| 126 | photosensitive element |
| 128 | evaluation unit |
| 130 | array |
| 132 | wavelength-selective element |
| 134 | object too close to the spectrometer device |
| 136 | object too far from the spectrometer device |
| 138 | objected at a distance within the predefined distance range |
| 140 | illuminating the object |
| 142 | generating a plurality of detector signals |
| 144 | obtain at least one item of relative detector signal information |
| 146 | determining a distance between the object and the spectrometer device |
| 148 | derive the spectroscopic information |
| 150 | taking at least one action |
| 152 | decision node |
| 154 | first photosensitive element |
| 156 | second photosensitive element |
| 158 | third photosensitive element |
| 160 | distance axis |
| 162 | spectral axis |
| 164 | intensity |
| 166 | distance |
| 168 | first item of distance information |
| 170 | second item of distance information |
| 172 | optimal distance |
| 174 | light distribution |
| 176 | signal level |
| 178 | angle |
| 180 | uncorrected detector signal |
| 182 | detectors signal corrected by using the Lambertian loss correction |
| 184 | detector signal corrected by using the Fresnel loss correction |
| 186 | detector signal corrected by using both the Lambertian loss correction and the Fresnel loss correction |

**Claims**

1. A method of obtaining at least one spectroscopic information on at least one object (112), wherein the method comprises using at least one spectrometer device (110), wherein the spectrometer device (110) comprises

   - at least one light source (114) configured for generating illumination light (116) for illuminating the object (112);

- at least one detector (122) configured for detecting detection light (124) from the object (112), wherein the detector (122) comprises a plurality of photosensitive elements (126), wherein each of the photosensitive elements (126) is configured for generating at least one detector signal in response to illumination by light, wherein the detector (122) is arranged to detect the detection light (124) at an angle with respect to the illumination light (116); and
- at least one evaluation unit (128) configured for evaluating the detector signals;

wherein the method comprises the following steps:

a) illuminating the object (112) by using the light source (114);
b) generating a plurality of detector signals by using the detector (122), wherein the plurality of detector signals comprises at least one detector signal from each photosensitive element (126);
c) evaluating, by using the evaluation unit (128), the plurality of detector signals to obtain at least one item of relative detector signal information;
d) determining a distance (166) between the object (112) and the spectrometer device (110) using the item of relative detector signal information; and
e) evaluating the plurality of detector signals from the photosensitive elements (126) to derive the spectroscopic information in case the distance (166) is within at least one predefined distance range.

2. The method according to the preceding claim, wherein, in case the distance (166) is not within the predefined distance range, the method comprises taking at least one action selected from the group consisting of: performing at least one user guidance guiding a user of the spectrometer device (110) to the predefined distance range; aborting the method of obtaining at least one spectroscopic information on at least one object (112); preventing the deriving of the spectroscopic information; preventing a presentation of the spectroscopic information to a user.

3. The method according to any one of the preceding claims, wherein the item of relative detector signal information comprises at least one of: an item of difference information comprising information on at least one difference between at least two of the detector signals; an item of quotient information comprising information on at least one quotient between at least two of the detector signals.

4. The method according to any one of the preceding claims, wherein the plurality of photosensitive elements (126) comprises at least three photosensitive elements (126) being arranged in an array (130), wherein the distance (166) is determined by comparing the detector signals from the three photosensitive elements (126).

5. The method according to any one of the preceding claims, wherein the distance (166) is determined by triangulation using them item of relative detector signal information.

6. The method according to any one of the preceding claims, wherein step b) comprises generating at least one first detector signal for a first photosensitive element (154), at least one second detector signal for a second photosensitive element (156) and at least one third detector signal for a third photosensitive element (158), wherein the item of relative detector signal information comprises at least one first item of relative detector signal information comprising a difference between the first detector signal and the second detector signal, wherein the item of relative detector signal information comprises at least one second item of relative detector signal information comprising a difference between the second detector signal and the third detector signal, wherein the step d) comprises determining at least one first item of distance information (168) from the first item of relative detector signal information and at least one second item of distance information (170) from the second item of relative detector signal information, wherein the distance (166) is determined by triangulation using the first item of distance information and the second item of distance information.

7. The method according the any one of the preceding claims, wherein the spectrometer device (110) further comprises at least one distance sensor, wherein the method further comprises determining the distance (166) between the object (112) and the spectrometer device (110) using the distance sensor, wherein the distance sensor comprises at least one of a triangulation sensor and a time-of-flight (ToF) sensor.

8. The method according to any one of the preceding claims, wherein the plurality of photosensitive elements (126) is arranged in a two-dimensional array, wherein the item of relative detector signal information is obtained by evaluating detector signals from two photosensitive elements (126) being arranged to detect detection light (124) at different angles with respect to the illumination light (116), wherein the distance (166) is determined to be within the predefined distance range if the term of relative detector signal information indicates a relative deviation of the detector signals by no more than 20%, specifically by no more than 15%, more specifically by no more than 10%.

9. The method according to the preceding claim, wherein at least one of the detector signals of the two photosensitive elements (126) is corrected by at least one of a Lambertian loss correction and a Fresnel loss correction.

10. The method according to the preceding claim, wherein the Lambertian loss correction comprises a correction factor $L = cos(\phi_{ref})/cos((\phi_i)$, wherein $\Phi_{ref}$ denotes a reference angle and $\phi_i$ denotes the angle of the photosensitive element (126) to be corrected.

11. The method according to any one of the two preceding claims, wherein the Fresnel loss correction comprises a correction factor

$$F = T_{ref}/T_\alpha = (1 - r_{ref}^2)/(1 - r_\alpha^2)$$

, wherein $T_{ref}$ denotes a transmittance of a reference path, wherein $T_\alpha$ denotes a transmittance of a path to be corrected and $r_i$ denotes a reflectivity coefficient of the reference path and the path to be corrected, respectively.

12. The method according to any one of the preceding claims, wherein the method further comprises at least one user guidance guiding a user of the spectrometer device (110) to the predefined distance range between the object (112) and the spectrometer device (110).

13. A spectrometer device (110) for obtaining at least one spectroscopic information on at least one object (112), wherein the spectrometer device (110) comprises:

    - at least one light source (114) configured for generating illumination light (116) for illuminating the object (112);
    - at least one detector (122) configured for detecting detection light (124) from the object (112), wherein the detector (122) comprises a plurality of photosensitive elements (126), wherein each of the photosensitive elements (126) is configured for generating at least one detector signal in response to illumination by light, wherein the detector (122) is arranged to detect the detection light (124) at an angle with respect to the illumination light (116); and
    - at least one evaluation unit (128) configured for evaluating the detector signals;

    wherein the spectrometer device (110) is configured for performing the method of obtaining at least one spectroscopic information on at least one object (112) according to any one of the preceding claims.

14. A computer program comprising instructions which, when the program is executed by the spectrometer device (110) according to any one of the preceding claims referring to a spectrometer device (110), cause the spectrometer device (110) to perform the method of obtaining at least one spectroscopic information on at least one object (112) according to any one of the preceding claims referring to a method of obtaining at least one spectroscopic information on at least one object (112).

15. A computer-readable storage medium comprising instructions which, when the instructions are executed by the spectrometer device (110) according to any one of the preceding claims referring to a spectrometer device (110), cause the spectrometer device (110) to perform the method of obtaining at least one spectroscopic information on at least one object (112) according to any one of the preceding claims referring to a method of obtaining at least one spectroscopic information on at least one object (112).

# FIG.1

# FIG.2

# FIG.3

# FIG.4A

# FIG.4B

# FIG.5

# FIG.6

Europäisches
Patentamt

European
Patent Office

Office européen
des brevets

# EUROPEAN SEARCH REPORT

**Application Number**

EP 24 16 4770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/140878 A1 (VALOUCH SEBASTIAN [DE] ET AL) 13 May 2021 (2021-05-13) | 1-3,5-15 | INV.<br>G01J3/02 |
| Y | * figures 1-5 * | 8 | G01J3/28 |
| A | * paragraphs [0001], [0058], [0126], [0127], [0130], [0133], [0138], [0147], [0154], [0155], [0160] - [0162] * | 4 | |
| | ----- | | |
| X | WO 2023/222742 A1 (TRINAMIX GMBH [DE]) 23 November 2023 (2023-11-23) | 1-4,7, 9-15 | |
| Y | * figures 1,2 * | 8 | |
| A | * page 1, line 7 - line 8 *<br>* page 4, line 35 - line 37 *<br>* page 13, line 21 - line 28 *<br>* page 23, line 13 - line 21 *<br>* page 23, line 40 - page 24, line 4 *<br>* page 32, line 32 - line 44 *<br>* page 33, line 22 - line 40 *<br>* page 34, line 36 *<br>* page 38, line 15 - line 22 *<br>* page 39, line 34 - line 42 *<br>* page 40, line 8 - line 11 * | 5,6 | |
| | ----- | | **TECHNICAL FIELDS SEARCHED (IPC)**<br><br>G01J |
| X | US 2003/169421 A1 (EHBETS PETER [CH]) 11 September 2003 (2003-09-11) | 1,13-15 | |
| A | * figures 1-9 *<br>* paragraphs [0023], [0036], [0051], [0080], [0083] * | 2-12 | |
| | ----- | | |
| X | US 2020/015923 A1 (SCHEIB CHARLES J [US] ET AL) 16 January 2020 (2020-01-16) | 1,13-15 | |
| A | * figures 1,2,19 *<br>* paragraphs [0003], [0073], [0082], [0086], [0091], [0123], [0148], [0164] * | 2-12 | |
| | ----- | | |
| | -/-- | | |

| | | |
|---|---|---|
| The present search report has been drawn up for all claims | | |
| Place of search | Date of completion of the search | Examiner |
| Munich | 16 August 2024 | Gangl, Martin |

EPO FORM 1503 03.82 (P04C01)

page 1 of 2

<table>
<tr><td></td><td>Europäisches<br>Patentamt</td><td rowspan="3" style="text-align:center">**EUROPEAN SEARCH REPORT**</td><td>**Application Number**</td></tr>
<tr><td></td><td>European<br>Patent Office</td><td rowspan="2">EP 24 16 4770</td></tr>
<tr><td></td><td>Office européen<br>des brevets</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/268627 A1 (HERMES WILFRIED [DE] ET AL) 25 August 2022 (2022-08-25) | 1,13-15 | |
| A | * figure 1 *<br>* paragraphs [0172], [0183], [0191] - [0197], [0201], [0218] *<br>----- | 2-12 | |
| | | | **TECHNICAL FIELDS SEARCHED (IPC)** |

The present search report has been drawn up for all claims

| Place of search | Date of completion of the search | Examiner |
|---|---|---|
| Munich | 16 August 2024 | Gangl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 16 4770

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2024

| Patent document cited in search report | | Publication date | Patent family member(s) | | Publication date |
|---|---|---|---|---|---|
| US 2021140878 | A1 | 13-05-2021 | CN | 112105897 A | 18-12-2020 |
| | | | EP | 3791145 A1 | 17-03-2021 |
| | | | JP | 7325500 B2 | 14-08-2023 |
| | | | JP | 2021523384 A | 02-09-2021 |
| | | | KR | 20210008058 A | 20-01-2021 |
| | | | US | 2021140878 A1 | 13-05-2021 |
| | | | WO | 2019215323 A1 | 14-11-2019 |
| WO 2023222742 | A1 | 23-11-2023 | NONE | | |
| US 2003169421 | A1 | 11-09-2003 | CA | 2412589 A1 | 26-05-2003 |
| | | | EP | 1314972 A1 | 28-05-2003 |
| | | | US | 2003169421 A1 | 11-09-2003 |
| US 2020015923 | A1 | 16-01-2020 | CN | 112702941 A | 23-04-2021 |
| | | | CN | 112702944 A | 23-04-2021 |
| | | | CN | 113194813 A | 30-07-2021 |
| | | | CN | 113226148 A | 06-08-2021 |
| | | | EP | 3823511 A2 | 26-05-2021 |
| | | | EP | 3823512 A1 | 26-05-2021 |
| | | | EP | 3823520 A2 | 26-05-2021 |
| | | | EP | 3823521 A2 | 26-05-2021 |
| | | | EP | 3849392 A2 | 21-07-2021 |
| | | | EP | 4018911 A1 | 29-06-2022 |
| | | | GB | 2591349 A | 28-07-2021 |
| | | | JP | 7416756 B2 | 17-01-2024 |
| | | | JP | 2021529633 A | 04-11-2021 |
| | | | JP | 2021530308 A | 11-11-2021 |
| | | | KR | 20210032992 A | 25-03-2021 |
| | | | KR | 20210061330 A | 27-05-2021 |
| | | | KR | 20210061331 A | 27-05-2021 |
| | | | US | 2020015668 A1 | 16-01-2020 |
| | | | US | 2020015806 A1 | 16-01-2020 |
| | | | US | 2020015897 A1 | 16-01-2020 |
| | | | US | 2020015898 A1 | 16-01-2020 |
| | | | US | 2020015899 A1 | 16-01-2020 |
| | | | US | 2020015900 A1 | 16-01-2020 |
| | | | US | 2020015901 A1 | 16-01-2020 |
| | | | US | 2020015902 A1 | 16-01-2020 |
| | | | US | 2020015903 A1 | 16-01-2020 |
| | | | US | 2020015904 A1 | 16-01-2020 |
| | | | US | 2020015905 A1 | 16-01-2020 |
| | | | US | 2020015906 A1 | 16-01-2020 |
| | | | US | 2020015907 A1 | 16-01-2020 |
| | | | US | 2020015914 A1 | 16-01-2020 |
| | | | US | 2020015923 A1 | 16-01-2020 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 16 4770

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2024

| Patent document cited in search report | Publication date | Patent family member(s) | Publication date |
|---|---|---|---|
| | | US 2020015924 A1 | 16-01-2020 |
| | | US 2020015925 A1 | 16-01-2020 |
| | | US 2022273288 A1 | 01-09-2022 |
| | | US 2022323066 A1 | 13-10-2022 |
| | | US 2023046220 A1 | 16-02-2023 |
| | | US 2023074951 A1 | 09-03-2023 |
| | | WO 2020016786 A2 | 23-01-2020 |
| | | WO 2020016863 A2 | 23-01-2020 |
| | | WO 2020016864 A2 | 23-01-2020 |
| | | WO 2020016865 A2 | 23-01-2020 |
| | | WO 2020016866 A2 | 23-01-2020 |
| | | WO 2020016867 A1 | 23-01-2020 |
| | | WO 2020016868 A2 | 23-01-2020 |
| | | WO 2020016869 A1 | 23-01-2020 |
| | | WO 2020016870 A2 | 23-01-2020 |
| | | WO 2020016871 A2 | 23-01-2020 |
| | | WO 2020016872 A1 | 23-01-2020 |
| US 2022268627 A1 | 25-08-2022 | CN 114127520 A | 01-03-2022 |
| | | EP 3999822 A1 | 25-05-2022 |
| | | JP 2022540687 A | 16-09-2022 |
| | | KR 20220034883 A | 18-03-2022 |
| | | US 2022268627 A1 | 25-08-2022 |
| | | WO 2021009280 A1 | 21-01-2021 |

EPO FORM P0459

For more details about this annex : see Official Journal of the European Patent Office, No. 12/82

page 2 of 2